# EUROPÄISCHE PATENTANMELDUNG

(11) **EP 0 798 640 A1**
(43) Veröffentlichungstag der Anmeldung: **01.10.1997**
(21) Anmeldenummer: 97103548.0
(22) Anmeldetag: 04.03.1997
(51) Int. Cl.: G06F 11/00

(54) **Datenverarbeitungsanlage mit peripherem Datenspecher**

(30) Priorität: 27.03.1996 DE 19612206
(71) Anmelder: Siemens Nixdorf Informationssysteme AG, 33106 Paderborn (DE)
(72) Erfinder: Wuttke, Thomas, 86159 Augsburg (DE)
(74) Vertreter: Fuchs, Franz-Josef, Dr.-Ing.

(57) **Zusammenfassung**

Periphere Datenspeicher (D-SP...) in Form von Platten (D) mit ihrer Steuerung (D-CTL) werden mit dem zugehörigen, an ein Rechnernetzwerk (R-NW) angeschlossenen Rechner (SR...) über ein vom Systembus des Rechners (SR) und des Rechnernetzwerkes entkoppeltes zweites Netzwerk (SP-NW) verbunden, so daß sich Störungen im System nicht mehr unmittelbar auf die gespeicherten Daten auswirken können. Erhöhung der Datenverfügbarkeit durch mehrere Rechner (SR1,SR2) und Datenspeicher (D-SP1,D-SP2) am zweiten Netzwerk (SP-NW), wobei die Rechner (SR...) als Server über das Rechnernetzwerk (R-NW) mit anderen Rechnern (AR...) zusammen arbeiten und die Daten gespiegelt gespeichert werden.

## Beschreibung

Heutige Rechner verfügen neben dem Arbeitsspeicher in der Regel über zusätzliche periphere Speicher in Form von Festplatten mit zugehöriger Steuerung. Während Programme bei Ausfall des Rechners in der Regel nach Behebung einer Störung nachgeladen werden können, falls dieses erforderlich sein sollte, ergeben sich aber häufig Schwierigkeiten bezüglich der üblichen Daten, wenn Störungen auftreten, da diese im äußersten Falle zerstört werden können. Störungen können sich dabei umso eher auf die Daten auswirken, je enger die Kopplung zwischen System und Speicher ist, also wenn z.B., wie vielfach üblich, Prozessor, Arbeitsspeicher und Festplatte im selben Gehäuse untergebracht sind.

Auch ist es bekannt, die Platten auszulagern und mehrere Platten mit ihren Laufwerken in einem gesonderten Schrank unterzubringen, wobei die Ansteuerung über einen sogenannten SCSI-Bus erfolgt und die Platten auch als redundante Arrays (RAID) betrieben werden können. Damit können zwar Fehler im Speichersystem selbst abgefangen werden, nicht aber solche in der zugehörigen Plattensteuerung und dem zugehörigen Rechnersystem. Das gilt insbesondere auch, wenn es sich dabei um einen Datenbankserver handelt. Fällt das zugehörige Rechnersystem aus, ist kein Zugriff auf die Daten der Platten mehr möglich, auch wenn der Serverrechner mit anderen Rechnern, wie z.B. bei der Lösung entsprechend der europäischen Patentanmeldung EP-O 405 926-A2, vernetzt ist.

Aufgabe der Erfindung ist es daher, Auswirkungen von Störungen im System auf die gespeicherten Daten zu vermindern, und die Verfügbarkeit der Daten zu erhöhen. Schließlich soll ein Zugriff selbst dann möglich sein, wenn der zugehörige Rechner aus irgendeinem Grunde gestört ist.

Der Ansatzpunkt zur Lösung dieser Aufgabe ergibt sich aus den Merkmalen des Patentanspruches 1. Danach wird zunächst eine Trennung zwischen dem als Datenverwaltungssystem arbeitenden Rechner und den übrigen Rechnern des Rechnersystems vorgenommen. Außerdem wird der Datenspeicher an den als Datenverwaltungssystem arbeitenden Rechner über ein vom Systembus dieses Rechners entkoppeltes zweites Netzwerk angeschlossen. Hardware- oder Softwarefehler im Rechnersystem können sich daher nicht mehr unmittelbar auf den Datenspeicher und damit auf die gespeicherten Daten auswirken.

Die Verfügbarkeit der Daten kann entsprechend Anspruch 2 durch einen weiteren als Datenverwaltungssystem arbeitenden Rechner und entsprechend Anspruch 3 durch gespiegelte Speicherung der Daten in zwei Datenspeichern wesentlich erhöht werden.

Einzelheiten der Erfindung seien nachfolgend an Hand von in der Zeichnung dargestellten Ausführungsbeispielen näher erläutert. Im einzelnen zeigen
- FIG 1: ein Strukturschaltbild eines Rechnernetzteiles mit gemäß der Erfindung entkoppeltem Datenspeicher und
- FIG 2: ein Strukturschaltbild eines Rechnernetzes mit mehreren Datenbankservern und entkoppelten Datenspeichern.

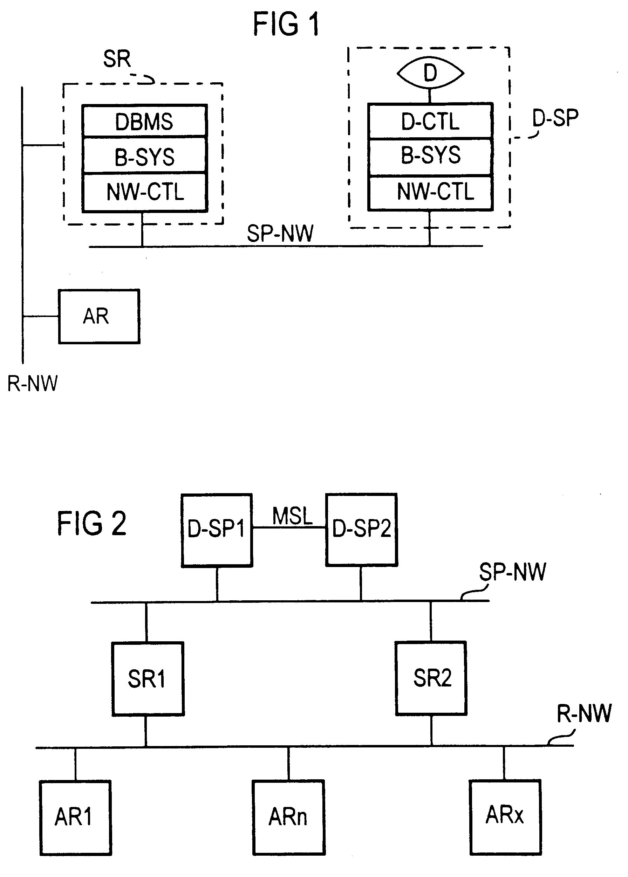

FIG 1 zeigt in linken Teil zwei an ein gemeinsames Netzwerk R-NW angeschlossene Rechner AR und SR, von denen letzterer als Datenverwaltungssystem mit dem im rechten Teil der Figur gezeigten Datenspeicher D-SP zusammenarbeitet. Rechner SR und Datenspeicher D-SP sind über ein Netztwerk SP-NW miteinander verbunden. Dazu sind beide Komponenten über Netzwerksteuerungen NW-CTL an das Netzwerk angeschlossen. Außerdem verfügen beide Komponenten in an sich bekannter Weise über eine speicherprogrammierte Steuerung mit einem Betriebssystem B-SYS, auf das die Anwendungen mit ihren Programmen aufsetzen. Beim als Server arbeitenden Rechnerteil SR ist das beispielsweise ein Datenbankmanagementsystem DBMS, während beim Datenspeicher D-SP die Plattensteuerung D-CTL für die Platten D darüber ansteuerbar ist. Der Datenspeicherteil ist damit vom Rechnernetzwer R-NW und vom inneren Steuersystem des Rechners SR vollkommen entkoppelt, so daß sich Störungen nicht auf die Plattendaten auswirken können.

Weitere große Vorteile ergeben sich, wenn eine derartige Struktur in einem größeren Rechnersystem zur Anwendung kommt. Ein Beispiel dazu zeigt FIG 2. Dieses System besteht in üblicher Weise aus einer Reihe von Anwendungsrechnern AR1 bis Arx oder Clients und Serverrechnern SR1 und SR2, die über das Rechnernetzwerk R-NW miteinander gekoppelt sind.

Die Serverrechner SR1 und SR2 arbeiten dabei als Datenbankserver, die entsprechend FIG 1 über ein weiteres Netzwerk SP-NW Zugriff zu den in den Datenspeichern D-SP1 und D-SP2 gespeicherten Daten haben. Diese beiden Datenspeicher können Daten unabhängig voneinander speichern, sie können aber auch, wie durch die Verbindung MSL als 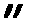 Mirrored Server Link" angedeutet, zusammenarbeiten und die Daten gespiegelt speichern. Die Spiegelung kann vollkommen programmgesteuert erfolgen, z.B. mit dem Programm NetWare SFT III™.

Das Speichernetzwerk SP-NW kann in bekannter Weise, z.B. als sogenanntes LAN, ausgebildet sein.

Insgesamt ergibt sich damit eine Datenverarbeitungsanlage mit sehr hoher Verfügbarkeit der Daten in den Datenspeichern D-SP... Dabei schützt die Spiegelung der Daten gegen den Ausfall eines Speichers D-SP, und bei mehreren Serverrechnern SR... am Netz ist die Wahrscheinlichkeit, daß alle Server ausfallen und damit kein Zugriff auf die Datenspeicher D-SP... mehr möglicht ist, äußerst gering.

## Patentansprüche

1. Datenverarbeitungsanlage, bestehend aus wenigstens zwei Rechnern (SR...,AR...), die über ein Netzwerk (R-NW) gekoppelt sind, und peripheren Datenspeichern (D-SP...) in Form von Festplatten (D) mit zugehöriger Steuerung (D-CTL), wobei einer der Rechner (SR) als Datenverwaltungssystem in Verbindung mit dem peripheren Datenspeicher (D-SP) arbeitet und mit diesem über ein zweites, vom Systembus des Rechners (SR) entkoppeltes Netzwerk (SP-NW) gekoppelt ist.

2. Datenverarbeitungsanlage nach Anspruch 1,
**dadurch gekennzeichnet,**
daß mehrere als Datenverwaltungssystem (DBMS) arbeitende Rechner (SR1,SR2) vorgesehen sind, die mit beiden Netzwerken (R-NW,SP-NW) gekoppelt sind.

3. Datenverarbeitungsanlage nach Anspruch 1 oder 2,
**dadurch gekennzeichnet,**
daß am Netzwerk (SP-NW) für den Datenspeicher (D-SP) wenigstens zwei Plattensteuerungen (D-CTL) mit ihren Festplatten (D) als Datenspeicher (DSP1, D-SP2) angeschlossen sind, und daß die Daten von beiden Datenspeichern (D-SP1,D-SP2) gespiegelt gespeichert werden.
